# NEUE EUROPÄISCHE PATENTSCHRIFT

(11) **EP 2 730 346 B2**
(45) Veröffentlichungstag und Bekanntmachung des Hinweises auf die Entscheidung über den Einspruch: **29.04.2020**
(45) Hinweis auf die Patenterteilung: 10.05.2017
(21) Anmeldenummer: 13184930.9
(22) Anmeldetag: 18.09.2013
(51) Int. Cl.: B21D 22/02, C21D 8/00, C21D 1/18, C21D 1/34, C21D 1/42, C21D 1/673, C21D 11/00, C21D 9/46

(54) **Warmformlinie zur Herstellung warmumgeformter und pressgehärteter Stahlblechprodukte**
Thermoforming line for producing thermoformed and press-hardened sheet steel products
Ligne moulée à chaud pour la fabrication de produits de tôle d'acier moulés à chaud et durcis à la presse

(30) Priorität: 07.11.2012 DE 102012110650
(43) Veröffentlichungstag der Anmeldung: 14.05.2014
(73) Patentinhaber: Benteler Automobiltechnik GmbH, 33102 Paderborn (DE)
(72) Erfinder: Trippe, Carsten, 33154 Salzkotten (DE); Wulfes, Dieter, 33178 Borchen (DE); Adelbert, Stefan, 33129 Delbrück (DE); Danger, Elisabeth, 33100 Paderborn (DE)
(74) Vertreter: Griepenstroh, Jörg

(56) Entgegenhaltungen:
- EP-A1- 2 014 777
- EP-A1- 2 182 081
- EP-A1- 2 182 082
- WO-A1-2010/048950
- WO-A1-2010/048951
- DE-A1-102006 058 601
- DE-A1-102009 025 896
- DE-A1-102010 009 345
- DE-A1-102010 033 816
- DE-A1-102010 049 205
- DE-B3-102010 004 081
- DE-B3-102010 048 209
- DE-U1-202012 000 616
- Barbara Stumpp: "Weniger ist mehr", Blech, 1 May 2010 (2010-05-01), page 34, 36,
- Wikipediaeintrag 'Formhärten' vom 17.09.2012
- "Fachbuch Handbuch der Umformtechnik", 1996 pages 174-179,437-440,

## Beschreibung

Die vorliegende Erfindung betrifft eine Warmformlinie zur Herstellung warmumgeformter und pressgehärteter Stahlblechprodukte gemäß den Merkmalen im Oberbegriff von Patentanspruch 1.

Die vorliegende Erfindung betrifft weiterhin ein Verfahren zur Herstellung eines warmumgeformten und pressgehärteten Kraftfahrzeugbauteils gemäß den Merkmalen im Patentanspruch 11.

Aus dem Stand der Technik ist es bekannt, Kraftfahrzeugkarosserien aus metallischen Werkstoffen herzustellen. Hierzu werden insbesondere Stahlwerkstoffe oder aber auch Leichtmetallwerkstoffe eingesetzt. Innerhalb der letzten Jahre wurden im Bereich der Stahlwerkstoffe hochfeste und höchstfeste Stähle eingesetzt, die zumindest partiell hohe Härten oder aber duktile Eigenschaften aufweisen, so dass die Festigkeit und auch die Crashperformance einer Kraftfahrzeugkarosserie gesteigert wird, bei gleichzeitiger Gewichtseinsparung.

So ist beispielsweise aus der DE 10 2010 004 081 B3 ein Vergütungsverfahren zum Herstellen von Stahlblechplatinen mit mindestens zwei Gefügebereichen unterschiedlicher Duktilität bekannt. Hierzu wird eine Platine zunächst in einem Ofen auf eine Temperatur homogen erwärmt und anschließend in einer Heizstation in zumindest Teilbereichen weiter auf eine Temperatur oberhalb der Austenitisierungstemperatur (AC3) erwärmt. Die Platine wird im Anschluss daran formgepresst und durch Abschrecken gehärtet.

Aus der EP 2 182 082 A1 ist ferner ein Verfahren und eine Vorrichtung zur Temperierung eines Stahlblechkörpers bekannt, wobei zunächt eine Stahlblechplatine auf über Austenitisierungstemperatur erwärmt wird und anschließend in eine Temperierstation eingelegt wird und hier durch Kontakt mit Kontaktplatten relativ zu der Austenitisierungstemperatur gekühlt wird. Energetisch nachteilig ist dabei, dass zunächst die komplette Platine auf über Austenitisierungstemperatur erwärmt werden muss und während der Kontaktkühlung die Bereiche, die auf Austenitisierungstemperatur bleiben sollen und nicht gekühlt werden, entweder auf der Austenitisierungstemperatur aktiv gehalten werden müssen oder aber die Blechplatine zuvor auf eine Temperatur, die deutlich über der Austenitisierungstemperatur liegt, gebracht werden müssen.

Aufgabe der vorliegenden Erfindung ist es, ausgehend vom Stand der Technik ein Verfahren sowie eine Vorrichtung aufzuzeigen, mit denen es möglich ist, Blechbauteile mit partiell voneinander verschiedenen Festigkeitseigenschaften herzustellen, wobei die Vorrichtung einen geringen Energiebedarf, geringe Anschaffungskosten und ein flexibles Einsatzspektrum aufweist.

Die erfindungsgemäße Aufgabe wird mit einer Warmformlinie zur Herstellung warmumgeformter und pressgehärteter Stahlblechprodukte mit den Merkmalen im Patentanspruch 1 gelöst.

Der verfahrenstechnische Teil der Aufgabe wird weiterhin mit einem Verfahren zur Herstellung eines warmumgeformten und pressgehärteten Kraftfahrzeugbauteils gemäß den Merkmalen im Patentanspruch 11 gelöst.

Vorteilhafte Ausführungsvarianten sind Gegenstand der abhängigen Patentansprüche.

Die Warmformlinie zur Herstellung warmumgeformter und pressgehärteter Stahlblechprodukte, insbesondere zur Herstellung von warmumgeformten und pressgehärteten Kraftfahrzeugbauteilen, weist eine Erwärmungsvorrichtung und eine Umformvorrichtung auf. Die Erwärmungsvorrichtung wiederum ist eine Temperierstation mit einem Oberwerkzeug und einem Unterwerkzeug, wobei in der Temperierstation mindestens eine Temperierquelle zum Heizen angeordnet ist. Erfindungsgemäß sind an der Temperierstation an dem Oberwerkzeug und/oder dem Unterwerkzeug austauschbare Temperierplatten anordnenbar, wobei die Temperierquelle als Induktor ausgebildet ist und die Temperierplatten durch den Induktor erwärmbar sind.

Erfindungsgemäß ist es somit möglich, mittels der Temperierplatten ein in die Temperierstation eingelegtes metallisches Bauteil, vorzugsweise eine Platine, zu erwärmen. Die Temperierplatten sind dabei derart an dem Oberwerkzeug und/oder Unterwerkzeug angeordnet, dass die Wärmeabgabe von der Temperierplatte an das zu erwärmende metallische Bauteil durch konduktive Wärmeübertragung, mithin durch Wärmeleitung, erfolgt. Damit nunmehr die Temperierplatten selbst auf eine Temperatur gebracht werden, die höher ist als die Umgebungstemperatur, sind in und/oder an dem Unterwerkzeug und/oder dem Oberwerkzeug Induktoren angeordnet. Mit Hilfe dieser Induktoren ist es möglich, aufgrund von induktiver Erwärmung die Temperierplatte selbst zu erwärmen. Somit ist es erfindungsgemäß möglich, dass die Temperierplatten zur Erwärmung verschiedener Bauteile an dem Oberwerkzeug und/oder dem Unterwerkzeug ausgetauscht werden können.

Insbesondere können die Temperierplatten bei Verschleiß und/oder Abnutzung und/oder Umrüstung ausgetauscht werden, es ist jedoch auch möglich, dass die Temperierplatten derart austauschbar sind, dass sie an die verschiedenen Erfordernisse der Erwärmung anpassbar sind. So ist es beispielsweise möglich, die Temperierplatten derart auszubilden, dass sie das zu erwärmende Metallbauteil, insbesondere die Platine, nur bereichsweise kontaktieren und mithin nur bereichsweise erwärmen.

Weiterhin bevorzugt sind die Temperierplatten selbst flächig zur Temperierung der Blechplatine ausgebildet. Hierdurch ist es insbesondere möglich, mit Hilfe der Temperierplatten eine Blechplatine zu erwärmen. Alternativ dazu ist es jedoch auch möglich, dass die Temperierplatten dreidimensional ausgebildet sind, wobei zwischen den Temperierplatten bei geschlossener Temperierstation ein Formhohlraum verbleibt. Innerhalb dieses Formhohlraumes befindet sich dann die Blechplatine. Im Rahmen der Erfindung ist unter dreidimensional ausgebildet zu verstehen, dass die Temperierplatten insbesondere eine dreidimensional verlaufende Kontaktbzw. Oberfläche besitzen.

Weiterhin bevorzugt ist in dem Oberwerkzeug oder in dem Unterwerkzeug jeweils mindestens ein Induktor angeordnet, wobei der Induktor des Oberwerkzeuges die Temperierplatte des Oberwerkzeuges erwärmt und der Induktor des Unterwerkzeuges die Temperierplatte des Unterwerkzeuges erwärmt, wobei vorzugsweise die Temperierplatten auf eine Temperatur von bis zu mehr als 1.000° C mit Hilfe der Induktoren erwärmbar sind. Hierdurch ist es im Rahmen der Erfindung möglich, dass ein eingelegtes metallisches Bauteil, insbesondere eine Blechplatine, die vorzugsweise aus einem Stahlwerkstoff ausgebildet ist, zumindest bereichsweise auf eine Temperatur oberhalb der Austenitisierungstemperatur erwärmbar ist. Im Rahmen der Erfindung ist es jedoch ebenfalls möglich, mit Hilfe der Induktoren gezielt eine Temperatur an der Temperierplatte einzustellen, die dann entsprechend die Blechplatine und/oder das metallische Bauteil erwärmt. So ist es beispielsweise im Rahmen der Erfindung möglich, gezielt eine Temperatur einzustellen, die die Blechplatine auf AC1 erwärmt. Im Rahmen der Erfindung ist es jedoch ebenfalls möglich, eine Temperatur an der Blechplatine derart einzustellen, dass sie auf eine gewünschte Temperatur zwischen 200° bis 1.200° erwärmbar ist. Insbesondere ist es durch Wahl der Temperierplatten und/oder durch Anordnung der Induktoren und/oder durch Regelung bzw. Steuerung der Induktoren möglich, eine in der Temperierstation eingelegte Blechplatine partiell auf voneinander verschiedene Temperaturen zu erwärmen.

Hierzu ist vorgesehen, dass der Induktor in einer ersten alternativen Ausführungsvariante im Wesentlichen die gleiche Flächenverteilung aufweist wie die zu dem Induktor gehörige Temperierplatte. Im Rahmen der Erfindung sind somit beispielsweise mehrere Induktionsschlangen und/oder Induktionsspulen derart an dem Oberwerkzeug und/oder Unterwerkzeug verteilt oder in das Oberwerkzeug und/oder Unterwerkzeug integriert, dass sie im Wesentlichen den gleichen Flächenbereich abdecken wie die dazugehörige Temperierplatte.

Alternativ dazu ist es jedoch auch möglich, dass der Induktor flächenmäßig verteilt kleiner ausgebildet ist als die dazugehörige Temperierplatte. In der Folge wird maßgeblich somit auch nur ein mit dem Induktor korrespondierender Flächenbereich erwärmt. Die übrigen Flächenbereiche der Temperierplatte werden zunächst nicht gezielt durch einen Induktor erwärmt. Hier tritt jedoch dann von dem erwärmten Flächenbereich eine Wärmeleitung an die nicht erwärmten Flächenbereiche der Temperierplatte auf, die im Rahmen der Erfindung jedoch insbesondere bei kurzzeitigen Erwärmungen zwischen einer Sekunde und bis zu 10 Minuten zu vernachlässigen ist.

Weiterhin ist es im Rahmen der Erfindung möglich, dass ein an dem Oberwerkzeug und/oder Unterwerkzeug angeordneter Induktor, insbesondere abschnittsweise, mit voneinander verschiedenen Spannungen beaufschlagbar ist, so dass an den Temperierplatten abschnittsweise voneinander verschiedene Temperaturen erzeugt werden. Dies wird beispielsweise dadurch realisiert, dass verschiedene Induktorschleifen oder aber Induktorschlangen innerhalb des Unterwerkzeuges und/oder Oberwerkzeuges verlegt sind, die bereichsweise unabhängig voneinander ansteuerbar sind.

Weiterhin bevorzugt ist es im Rahmen der Erfindung möglich zur Herstellung von partiell voneinander verschiedenen Erwärmungen, dass Temperierplatten eingesetzt werden, die mehrteilig ausgebildet sind. Die mindestens zwei voneinander verschiedenen Teile der Temperierplatte weisen dann zwei voneinander verschiedene Wärmeleiteigenschaften und/oder Werkstoffeigenschaften auf. Somit ist es beispielsweise bei zwei voneinander verschiedenen Wärmeleiteigenschaften möglich, dass die Temperierplatte durch eine homogene induktive Erwärmung auf eine im Wesentlichen gleiche Temperatur erwärmt wird, diese Temperatur jedoch aufgrund der voneinander verschiedenen Wärmeleiteigenschaften in den Bereichen unterschiedlich an die zu erwärmende Blechplatine abgibt, wodurch sich wiederum die Blechplatine unterschiedlich voneinander erwärmt.

Alternativ dazu ist es auch möglich, dass die Temperierplatte selbst voneinander verschiedene Werkstoffeigenschaften aufweist. Hierdurch wird es wiederum ermöglicht, dass bei gleicher Einwirkung durch den Induktor die Temperierplatte sich selbst aufgrund der voneinander verschiedenen Werkstoffeigenschaften unterschiedlich erwärmt. Hierdurch wird dann bei Kontakt die entsprechende Blechplatine ebenfalls, zumindest bereichsweise, auf voneinander verschiedene Temperaturen erwärmt.

Es ist möglich, dass Bereiche erster Art und Bereiche zweiter Art mit voneinander verschiedenen Temperaturen innerhalb einer Blechplatine temperiert werden, wobei die Bereiche erster Art einen unmittelbaren Kontakt mit den Temperierplatten selbst bei geschlossener Temperierstation haben und in den Bereichen zweiter Art zwischen der Bauteiloberfläche der Blechplatine und der Temperierplatte ein Abstand ausgebildet ist, wobei der Abstand insbesondere als Luftspalt ausgebildet ist. Alternativ ist es dazu jedoch auch möglich, dass in dem Bereich zweiter Art ein Isolierwerkstoff zwischen der Bauteiloberfläche der Blechplatine und der Temperierplatte selbst angeordnet ist. Durch den Luftspalt und/oder den Isolierwerkstoff erfolgt somit wiederum eine geringere Wärmeleitung von der Temperierplatte an die Blechplatine, so dass diese mit voneinander verschiedenen Temperaturen erwärmt wird.

Die zuvor benannten verschiedenen Ausführungsvarianten der Temperierplatten und/oder der abschnittsweisen Erwärmung der Temperierplatten sind im Rahmen der Erfindung ebenfalls beliebig untereinander kombinierbar, mit den damit einhergehenden Vorteilen. Erfindungswesentlicher Vorteil ist es, dass zumindest zwei voneinander verschiedene Bereiche in einer Platine unterschiedlich temperierbar sind. Ferner ist es möglich, insbesondere kleine lokale Flächen mit den erfindungsgemäßen Temperierplatten zu temperieren. Ganz besonders bevorzugt ist es möglich, im Bereich von Flanschen oder Durchzügen eine Temperierung vorzunehmen, insbesondere an den Flanschen oder aber den die Durchzüge berandenden Bereiche.

Im Anschluss an die Erwärmung der Blechplatine wird diese dann in ein Umformwerkzeug transferiert, dort warmumgeformt und bevorzugt im Anschluss daran pressgehärtet.

Im Rahmen der Erfindung ist es weiterhin möglich, dass innerhalb der Warmformlinie der Temperierstation selbst ein Ofen vorgeschaltet ist und die Metallbauteile oder die Blechplatinen in dem Ofen auf eine Temperatur vorerwärmbar sind. Beispielsweise ist es möglich, das Bauteil homogen innerhalb des Ofens auf AC1-Temperatur zu erwärmen und dann durch die Temperierstation abschnittsweise auf eine Temperatur gleich oder oberhalb des AC3-Punktes zu erwärmen. Insbesondere ist dieser Erwärmungsvorgang mit Hilfe der Temperierstation besonders kosteneffizient durchführbar, da aufgrund der induktiven Erwärmung ein nur geringer Energieeinsatz notwendig ist.

Weiterhin bevorzugt weist die Temperierplatte auf dem Unterwerkzeug Abstandhalter auf, wobei die auf der Temperierplatte abgelegte Platine oder das metallische Bauteil von dem Abstandhalter derart abstützbar ist, dass es in einem Abstand zur Oberfläche der Temperierplatte gehalten ist. Insbesondere ist dies im Bereich zweiter Art ausgebildet, so dass hier eine gegenüber dem Bereich erster Art geringere Erwärmung stattfindet.

Weiterhin bevorzugt weisen die Temperierplatten selbst eine Beschichtung auf, insbesondere eine zunderfeste Beschichtung. Hierdurch wird erreicht, dass über den gesamten Produktionsprozess hinweg eine annähernd gleiche Produktionsqualität verbleibt, da die Temperierplatten durch die zunderfeste Beschichtung im Wesentlichen nicht verschmutzen und somit konstant über den gesamten Produktionseinsatz hinweg die gleiche Erwärmung der voneinander verschiedenen Platinen, Blechplatinen und/oder metallischen Bauteilen durchführbar ist. Besonders bevorzugt ist die Beschichtung weiterhin hitzefest und/oder verschleißfest ausgebildet.

Weiterhin bevorzugt ist die Temperierplatte formschlüssig an dem Oberwerkzeug und/oder dem Unterwerkzeug gekoppelt, vorzugsweise über Bolzen. Dies ermöglicht insbesondere eine derartige Kopplung, dass die Bolzen auch abschraubbar sind und/oder als Schnellverschlüsse ausgebildet sind, so dass die Temperierplatten bei anderer Dimensionierung und/oder Verschleiß leicht bei geringen Rüstzeiten austauschbar sind.

Im Rahmen der Erfindung sind die Temperierplatten weiterhin derart bevorzugt ausgebildet, dass sie eine in den Formhohlraum ausgebildete konvexe Krümmung aufweisen. Mithin steht ein mittlerer Bereich der Temperierplatte in den Formhohlraum hinein zeigend gegenüber den zu den Seiten sich abflachenden Bereichen der Temperierplatte vor. Hierdurch wird bei Schließen der Temperierstation erreicht, dass zunächst der mittlere Bereich an der Platine anliegt und durch weiteres Schließen und/oder Pressen der Temperierstation sich dann sukzessive auch die Randbereiche an die zu erwärmende Blechplatine anlegen. Im Rahmen der Erfindung wird hierdurch ein vollflächiger Kontakt zwischen Temperierplatte und Oberfläche der zu erwärmenden Blechplatine hergestellt. Erfindungsgemäß ist es wiederum möglich, aufgrund der induktiven Erwärmung der Temperierplatte selbst hierdurch entstehende Verschiebungen von bis zu wenigen Millimetern auszugleichen, da die Temperierplatte selbst über die induktive Erwärmung kontaktlos erwärmt wird.

Weiterer Bestandteil der vorliegenden Erfindung ist ein Verfahren zur Herstellung eines warmumgeformten und pressgehärteten Kraftfahrzeugbauteils mit einer Warmformlinie nach Anspruch 11, wobei das Verfahren durch folgende Verfahrensschritte gekennzeichnet ist:
- Erwärmen einer Platine auf eine Temperatur unter AC3,
- Transfer der Platine in eine Temperierstation,
- Erwärmen Bereiche erster Art in der Temperierstation (1), wobei die Bereiche erster Art in unmittelbarem Kontakt mit der Temperierplatte (4, 5) kommen und mittels Wärmeleitung auf über AC3 erwärmt werden,
- Halten Bereiche zweiter Art auf einer Temperatur unter AC3,
- Transfer der Blechplatine in ein Umformwerkzeug, Warmumformen und Presshärten.

Im Rahmen der Erfindung ist es weiterhin möglich, dass die Platine nicht bereits vor dem Transfer in die Temperierstation auf unter AC3, sondern auf unter AC1-Temperatur erwärmt wird. Bereiche zweiter Art werden dann in der Temperierstation auf einer Temperatur unterhalb des AC1-Punktes gehalten. Erfindungswesentlicher Vorteil des Verfahrens ist insbesondere die Möglichkeit, die Temperatur gezielt an der zu erwärmenden Blechplatine und/oder dem zu erwärmenden metallischen Bauteil einzustellen und des Weiteren bei gleichzeitig geringem Energieeinsatz aufgrund der induktiven Erwärmung der Temperierplatte, wobei dann wiederum von der Temperierplatte die Erwärmung auf das zu erwärmende Bauteil mittels Konduktion erfolgt.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine Temperierstation zur Durchführung des Verfahrens mit voneinander verschiedenen Temperierplatten, wobei die Temperierplatten voneinander verschiedene Bereiche aufweisen;
- Figur 2: die Temperierstation mit nur teilweise angeordnetem Induktor und
- Figur 3: eine Draufsicht auf eine Temperierplatte mit aufgelegter Platine.

In den Figuren werden für gleiche oder ähnliche Bauteile dieselben Bezugszeichen verwendet, auch wenn eine wiederholte Beschreibung aus Vereinfachungsgründen entfällt.

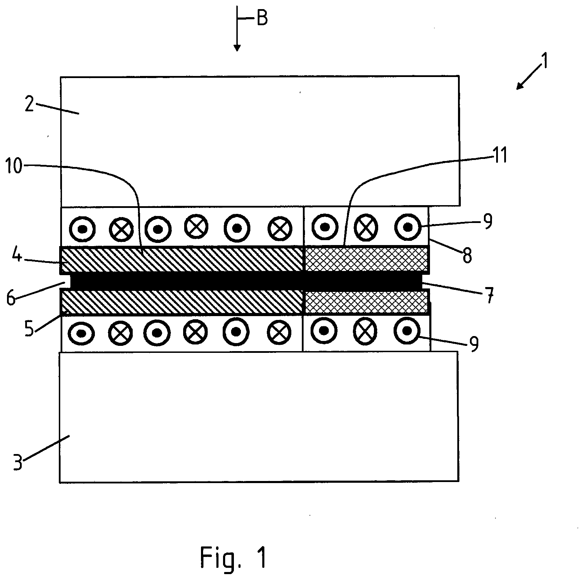

Figur 1 zeigt eine Temperierstation 1, wobei die Temperierstation ein Oberwerkzeug 2 und ein Unterwerkzeug 3 aufweist. Das Oberwerkzeug 2 und/oder das Unterwerkzeug 3 sind in Bewegungsrichtung B bewegbar, so dass zwischen einer Temperierplatte 4 des Oberwerkzeuges 2 und einer Temperierplatte 5 des Unterwerkzeuges 3 ein Formhohlraum 6 verbleibt. In den Formhohlraum 6 ist eine Blechplatine 7 einlegbar, wobei die Blechplatine 7 dann von den Temperierplatten 4, 5 mittels konduktiver Erwärmung auf eine vorgegebene Temperatur erwärmbar ist.

Damit die Temperierplatte 5 selbst erwärmt wird, sind an dem Unterwerkzeug 3 und auch hier dargestellt an dem Oberwerkzeug 2 Induktoren 8 in Form von Induktionsschleifen 9 vorgesehen. Mittels der Induktoren 8 sind die Temperierplatten 4, 5 selbst dann auf eine gewünschte Temperatur erwärmbar, wobei dann von den Temperierplatten 4, 5 aus bei Anlagekontakt mit der Blechplatine 7 eine Wärmeleitung in die Blechplatine 7 erfolgt. Folglich kann die Temperatur der Blechplatine 7 selbst, je nach Verweildauer zwischen Oberwerkzeug 2 und Unterwerkzeug 3, auf eine Temperatur bis zu der Temperatur der Temperierplatte 4, 5 erwärmt werden.

Weiterhin dargestellt in Figur 1 ist, dass sowohl die Temperierplatte 4 des Oberwerkzeuges 2 als auch die Temperierplatte 5 des Unterwerkzeuges 3 jeweils zweigeteilt ist. So ist ein erster Teil 10 aus einem Werkstoff und ein zweiter Teil 11 aus einem zweiten, davon verschiedenen Werkstoff ausgebildet. Bei dem ersten Teil 10 handelt es sich beispielsweise um einen gut wärmeleitenden Werkstoff der Temperierplatte 4, 5 und bei dem zweiten Teil 11 um einen in Relation zu dem ersten Teil 10 geringer wärmeleitenden Werkstoff. Der zweite Teil 11 kann jedoch beispielsweise auch als Isolierwerkstoff ausgebildet sein. Beispielsweise kann hier ein Keramik- oder aber auch ein anderweitiger Isolierwerkstoff eingesetzt sein. Hierdurch ist die Blechplatine 7 auf voneinander verschiedene Temperaturen erwärmbar.

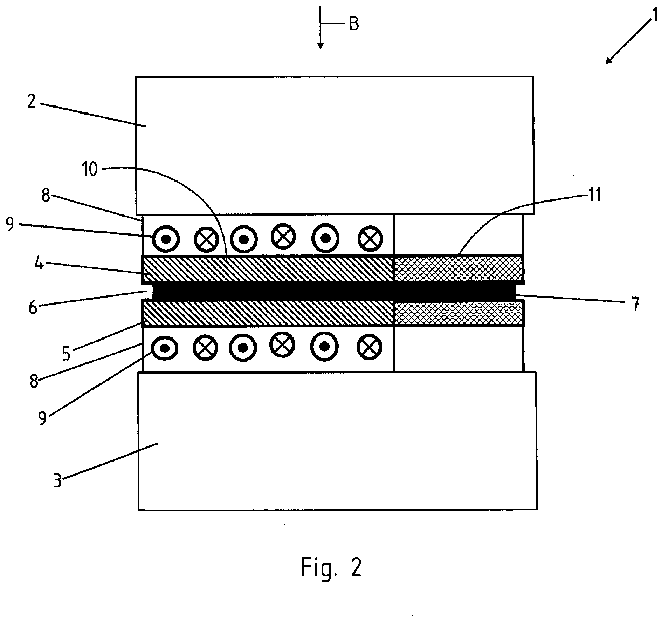

Figur 2 zeigt eine analoge Ausführungsvariante, wobei auf die rechte Bildebene bezogen keine Induktoren 8 über dem zweiten Teil 11 der Temperierplatten 4, 5 vorgesehen sind.

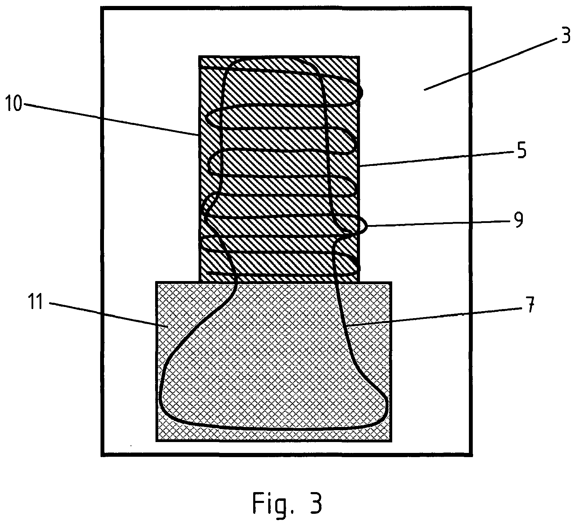

Figur 3 zeigt eine Draufsicht auf ein Unterwerkzeug 3 mit aufgelegter Blechplatine 7, deren Umriss gezeigt ist. Zu erkennen ist, dass die Temperierplatte 5 sich selbst nicht über den vollständigen Bereich des Unterwerkzeuges 3 erstreckt, sondern nur abschnittsweise, an die äußere Geometrie der Blechplatine 7 angelehnt, in ihren äußeren Abmessungen dimensioniert ist. Hierdurch wird der Energieeintrag zur Erwärmung der Blechplatine 7 auf ein notwendiges Minimum reduziert. Ebenfalls gut zu erkennen ist, dass eine Induktionsschleife 9 nur im Bereich des ersten Teils 10 der Temperierplatte 4, 5 ausgebildet ist, wohingegen der zweite Teil 11 der Temperierplatte 4, 5 keinen Induktor aufweist. Die Induktionsschleife 9 selbst ist dabei derart über den ersten Teil 10 verteilt, dass auch hier eine Anpassung der Induktionsschleife 9 an die äußeren Abmessungen des ersten Teils 10 der Temperierplatte 5 ausgebildet ist, was wiederum zu einer Energieeinsparung führt.

### Bezugszeichen:

- 1 -: Temperierstation
- 2 -: Oberwerkzeug
- 3 -: Unterwerkzeug
- 4 -: Temperierplatte zu 2
- 5 -: Temperierplatte zu 3
- 6 -: Formhohlraum
- 7 -: Blechplatine
- 8 -: Induktor
- 9 -: Induktionsschleife
- 10-: erster Teil zu 4, 5
- 11 -: zweiter Teil zu 4, 5

- B -: Bewegungsrichtung

## Patentansprüche

1. Warmformlinie zur Herstellung warmumgeformter und pressgehärteter Stahlblechprodukte als Kraftfahrzeugbauteile, aufweisend eine Erwärmungsvorrichtung und eine Umformvorrichtung, wobei die Erwärmungsvorrichtung eine Temperierstation (1) mit einem Oberwerkzeug (2) und einem Unterwerkzeug (3) aufweist und die Temperierstation (1) mindestens eine Temperierquelle zum Heizen aufweist und die Temperierquelle als Induktor (8) ausgebildet ist, und die Temperierplatten (4, 5) durch den Induktor (8) erwärmbar sind,**dadurch gekennzeichnet, dass** an der Temperierstation (1), an dem Oberwerkzeug (2) und/oder dem Unterwerkzeug (3) bei Umrüstung der Temperierstation (1) zur Erwärmung verschiedener Bauteile austauschbare Temperierplatten (4, 5) anordnenbar sind und dass mit den Temperierplatten (4, 5) an der Blechplatine (7) Bereiche erster Art und Bereiche zweiter Art mit voneinander unterschiedlichen Temperaturen temperiert werden, wobei die Bereiche erster Art einen unmittelbaren Kontakt mit den Temperierplatten (4, 5) bei geschlossener Temperierstation haben und dass in den Temperierplatten (4, 5) in den Bereichen zweiter Art ein Isolierwerkstoff angeordnet ist.

2. Warmformlinie nach Anspruch 1, **dadurch gekennzeichnet, dass** die Temperierplatten (4, 5) flächig zur Erwärmung einer Blechplatine (7) ausgebildet sind oder dass die Temperierplatten (4, 5) dreidimensional ausgebildet sind, wobei zwischen den Temperierplatten (4, 5) bei geschlossener Temperierstation (1) ein Formhohlraum verbleibt.

3. Warmformlinie nach Anspruch 1 oder 2, **dadurch gekennzeichnet, dass** in dem Oberwerkzeug (2) und in dem Unterwerkzeug (3) ein Induktor (8) angeordnet ist, wobei der Induktor (8) des Oberwerkzeuges (2) die Temperierplatte (4) des Oberwerkzeuges (2) erwärmt und der Induktor (8) des Unterwerkzeuges (3) die Temperierplatte (5) des Unterwerkzeuges (3) erwärmt.

4. Warmformlinie nach einem der Ansprüche 1 bis 3, **dadurch gekennzeichnet, dass** der Induktor (8) im Wesentlichen die gleiche Flächenverteilung aufweist wie die zu dem Induktor (8) gehörige Temperierplatte (4, 5) oder dass der Induktor (8) kleiner ist als die zugehörige Temperierplatte (4, 5), wobei durch Aktivieren des Induktors (8) die Temperierplatte (4, 5) zumindest partiell erwärmt wird.

5. Warmformlinie nach einem der vorangehenden Ansprüche, **dadurch gekennzeichnet, dass** der Induktor (8) abschnittsweise mit voneinander verschiedenen Spannungen beaufschlagbar ist, so dass die Temperierplatte (4, 5) abschnittsweise voneinander verschiedene Temperaturen aufweist.

6. Warmformlinie nach einem der vorangehenden Ansprüche, **dadurch gekennzeichnet, dass** eine Temperierplatte (4, 5) mehrteilig ausgebildet ist, wobei die mindestens zwei unterschiedlichen Teile (10, 11) voneinander verschiedene Wärmeleiteigenschaften und/oder Werkstoffeigenschaften aufweisen.

7. Warmformlinie nach einem der vorangehenden Ansprüche, **dadurch gekennzeichnet, dass** der Temperierstation (1) ein Ofen vorgeschaltet ist, wobei die Metallbauteile oder die Blechplatinen (7) in dem Ofen auf eine Temperatur vorerwärmbar sind.

8. Warmformlinie nach einem der vorliegenden Ansprüche, **dadurch gekennzeichnet, dass** zumindest die Temperierplatte (4, 5) auf dem Unterwerkzeug (3) Abstandhalter aufweist, wobei die auf der Temperierplatte (4, 5) abgelegte Blechplatine (7) oder das Metallbauteil in den Bereichen zweiter Art von dem Abstandhalter abstützbar ist.

9. Warmformlinie nach einem der vorangehenden Ansprüche, **dadurch gekennzeichnet, dass** die Temperierplatte (4, 5) eine zunderfeste Beschichtung aufweist.

10. Warmformlinie nach einem der vorangehenden Ansprüche, **dadurch gekennzeichnet, dass** die Temperierplatte (4,5) formschlüssig an dem Oberwerkzeug (2) und/oder dem Unterwerkzeug (3) über Bolzen gekoppelt ist.

11. Verfahren zur Herstellung eines warmumgeformten und pressgehärteten Kraftfahrzeugbauteils mit einer Warmformlinie zur Herstellung warmumgeformter und pressgehärteter Stahlblechprodukte als Kraftfahrzeugbauteile, aufweisend eine Erwärmungsvorrichtung und eine Umformvorrichtung, wobei die Erwärmungsvorrichtung eine Temperierstation (1) mit einem Oberwerkzeug (2) und einem Unterwerkzeug (3) aufweist und die Temperierstation (1) mindestens eine Temperierquelle zum Heizen aufweist und die Temperierquelle als Induktor (8) ausgebildet ist, und die Temperierplatten (4, 5) durch den Induktor (8) erwärmbar sind, wobei dass an der Temperierstation (1), an dem Oberwerkzeug (2) und/oder dem Unterwerkzeug (3) bei Umrüstung der Temperierstation (1) zur Erwärmung verschiedener Bauteile austauschbare Temperierplatten (4, 5) anordnenbar sind, **gekennzeichnet, durch** folgende Verfahrensschritte:
- Erwärmen einer Blechplatine (7) auf eine Temperatur unter AC3,
- Transfer der Blechplatine (7) in eine Temperierstation (1),
- Erwärmen Bereiche erster Art in der Temperierstation (1), wobei die Bereiche erster Art in unmittelbarem Kontakt mit der Temperierplatte (4, 5) kommen und mittels konduktiver Erwärmung auf über AC3 erwärmt werden,
- Halten Bereiche zweiter Art auf einer Temperatur unter AC3,
- Transfer der Blechplatine (7) in ein Umformwerkzeug, Umformen und Presshärten.

12. Verfahren nach Anspruch 11, **dadurch gekennzeichnet, dass** die Blechplatine (7) auf unter AC1 erwärmt wird, wobei der Bereich zweiter Art in der Temperierstation (1) unter AC1 gehalten wird.

## Claims

1. Thermoforming line for the production of heat-formed and press-hardened sheet steel products as motor vehicle components, comprising a heating device and a forming device, wherein the heating device comprises a temperature conditioning station (1) with an upper tool (2) and a lower tool (3) and the temperature conditioning station (1) has at least one temperature conditioning source for heating and the temperature conditioning source is formed as an inductor (8), and the temperature conditioning plates (4, 5) can be heated by the inductor (8), **characterised in that** exchangeable temperature conditioning plates (4, 5) can be arranged at the temperature conditioning station (1) on the upper tool (2) and/or on the lower tool (3) when modifying the temperature conditioning station (1) in order to heat different components and that regions of a first type and regions of a second type on the sheet metal plate (7) are temperature conditioned at different temperatures with the temperature conditioning plates (4, 5), wherein the regions of the first type are in direct contact with the temperature conditioning plates (4, 5) when the temperature conditioning station is closed and that in the temperature conditioning plates (4, 5) an insulating material is arranged in the regions of the second type.

2. Thermoforming line according to claim 1, **characterised in that** the temperature conditioning plates (4, 5) are formed two-dimensionally for heating a sheet metal plate (7), or that the temperature conditioning plates (4, 5) are formed three-dimensionally, wherein a mould cavity remains between the temperature conditioning plates (4, 5) when the temperature conditioning station (1) is closed.

3. Thermoforming line according to claim 1 or 2, **characterised in that** an inductor (8) is arranged in the upper tool (2) and in the lower tool (3), wherein the inductor (8) of the upper tool (2) heats the temperature conditioning plate (4) of the upper tool (2) and the inductor (8) of the lower tool (3) heats the temperature conditioning plate (5) of the lower tool (3).

4. Thermoforming line according to any one of claims 1 to 3, **characterised in that** the inductor (8) has substantially the same area distribution as the temperature conditioning plate (4, 5) belonging to the inductor (8) or that the inductor (8) is smaller than the associated temperature conditioning plate (4, 5), wherein the temperature conditioning plate (4, 5) is at least partially heated by activating the inductor (8).

5. Thermoforming line according to any one of the preceding claims, **characterised in that** the inductor (8) can be subjected to different voltages over different sections, so that the temperature conditioning plate (4, 5) has different temperatures over different sections.

6. Thermoforming line according to any one of the preceding claims, **characterised in that** a temperature conditioning plate (4, 5) is formed of a plurality of parts, wherein the at least two different parts (10, 11) have different thermal conductivities and/or material properties.

7. Thermoforming line according to any one of the preceding claims, **characterised in that** a furnace is arranged upstream of the temperature conditioning station (1), wherein the metal components or the sheet metal plates (7) can be preheated to a temperature in the furnace.

8. Thermoforming line according to any one of the preceding claims, **characterised in that** at least the temperature conditioning plate (4, 5) has a spacer on the lower tool (3), wherein the sheet metal plate (7) or the metal component deposited on the temperature conditioning plate (4, 5) can be supported by the spacer in the regions of the second type.

9. Thermoforming line according to any one of the preceding claims, **characterised in that** the temperature conditioning plate (4, 5) has a scale-resistant coating.

10. Thermoforming line according to any one of the preceding claims, **characterised in that** the temperature conditioning plate (4, 5) is coupled in a positive engagement manner by pins to the upper tool (2) and/or to the lower tool (3).

11. Method for producing a heat-formed and press-hardened vehicle component with a thermoforming line for producing heat-formed and press-hardened sheet steel products as vehicle components, comprising a heating device and a forming device, wherein the heating device comprises a temperature conditioning station (1) with an upper tool (2) and a lower tool (3) and the temperature conditioning station (1) has at least one temperature conditioning source for heating and the temperature conditioning source is formed as an inductor (8), and the temperature conditioning plates (4, 5) can be heated by the inductor (8), wherein exchangeable temperature conditioning plates (4, 5) can be arranged at the temperature conditioning station (1) on the upper tool (2) and/or on the lower tool (3) when modifying the temperature conditioning station (1) in order to heat different components **characterised by** the following method steps:
- heating a sheet metal plate (7) to a temperature below AC3,
- transfer of the sheet metal plate (7) to a temperature conditioning station (1),
- heating regions of a first type in the temperature conditioning station (1), wherein the regions of the first type come into direct contact with the temperature conditioning plate (4, 5) and are heated by means of conductive heating to above AC3,
- maintaining regions of the second type at a temperature below AC3,
- transfer of the sheet metal plate (7) to a forming tool, followed by forming and press-hardening.

12. Method according to claim 11, **characterised in that** the sheet metal plate (7) is heated to below AC1, wherein the region of the second type is maintained at a temperature below AC1 in the temperature conditioning station (1).

## Revendications

1. Ligne de formage à chaud pour la fabrication de produits de tôle d'acier moulés à chaud et durcis à la presse tels que des composants de véhicules automobiles, présentant un dispositif de chauffage et un dispositif de formage, dans lequel le dispositif de chauffage présente un poste de maintien de température (1) avec un outil supérieur (2) et un outil inférieur (3) et le poste de maintien de température (1) présente au moins une source de maintien de température pour le chauffage et la source de maintien de température se présente sous la forme d'un inducteur (8), et les plaques de maintien de température (4, 5) peuvent être chauffées par l'inducteur (8), **caractérisée en ce que** des plaques de maintien de température (4, 5) échangeables peuvent être agencées, pour le chauffage de divers composants, sur le poste de maintien de température (1), sur l'outil supérieur (2) et/ou sur l'outil inférieur (3) lors de l'installation du poste de maintien de température (1) et **en ce que** des zones d'un premier type et des zones d'un second type sont maintenues à des températures différentes les unes des autres à l'aide des plaques de maintien de température (4, 5) au niveau des flans de tôle (7), dans laquelle les zones d'un premier type ont un contact direct avec les plaques de maintien de température (4, 5) lorsque le poste de maintien de température est fermé et **en ce qu'**un matériau isolant est agencé dans les plaques de maintien de température (4, 5) dans les zones d'un second type.

2. Ligne de formage à chaud selon la revendication 1, **caractérisée en ce que** les plaques de maintien de température (4, 5) sont conçues de manière plane pour le chauffage d'un flan de tôle (7) ou les plaques de maintien de température (4, 5) sont conçues en mode tridimensionnel, dans laquelle un espace creux de formage subsiste entre les plaques de maintien de température (4, 5) lorsque le poste de maintien de température (1) est fermé.

3. Ligne de formage à chaud selon la revendication 1 ou 2, **caractérisée en ce qu'**un inducteur (8) est agencé dans l'outil supérieur (2) et dans l'outil inférieur (3), dans laquelle l'inducteur (8) de l'outil supérieur (2) chauffe la plaque de maintien de température (4) de l'outil supérieur (2) et l'inducteur (8) de l'outil inférieur (3) chauffe la plaque de maintien de température (5) de l'outil inférieur (3).

4. Ligne de formage à chaud selon l'une quelconque des revendications 1 à 3, **caractérisée en ce que** l'inducteur (8) présente sensiblement la même distribution de surface que la plaque de maintien de température (4, 5) appartenant à l'inducteur (8) ou **en ce que** l'inducteur (8) est plus petit que la plaque de maintien de température rapportée (4, 5), dans laquelle la plaque de maintien de température (4, 5) est chauffée au moins en partie par activation de l'inducteur (8).

5. Ligne de formage à chaud selon l'une quelconque des revendications précédentes, **caractérisée en ce que** l'inducteur (8) peut être alimenté par sections par des tensions différentes l'une de l'autre de sorte que la plaque de maintien de température (4, 5) présente par sections des températures différentes l'une de l'autre.

6. Ligne de formage à chaud selon l'une quelconque des revendications précédentes, **caractérisée en ce qu'**une plaque de maintien de température (4, 5) est conçue en partie multiples, dans laquelle les au moins deux parties différentes (10,11) présentent des propriétés de conductibilité thermique et/ou des propriétés de matériaux différentes l'une de l'autre.

7. Ligne de formage à chaud selon l'une quelconque des revendications précédentes, **caractérisée en ce que** le poste de maintien de température (1) est relié à un four, dans laquelle les composants métalliques ou les flans de tôle (7) peuvent être préchauffés dans le four à une certaine température.

8. Ligne de formage à chaud selon l'une quelconque des revendications précédentes, **caractérisée en ce qu'**au moins la plaque de maintien de température (4, 5) présente sur l'outil inférieur (3) des entretoises, dans laquelle le flan de tôle (7) déposé sur la plaque de maintien de température (4, 5) ou le composant de métal peut être supporté par l'entretoise dans les zones du second type.

9. Ligne de formage à chaud selon l'une quelconque des revendications précédentes, **caractérisée en ce que** la plaque de maintien de température (4, 5) présente un revêtement résistant à la calamine.

10. Ligne de formage à chaud selon l'une quelconque des revendications précédentes, **caractérisée en ce que** la plaque de maintien de température (4, 5) est mécaniquement couplée à l'outil supérieur (2) et/ou à l'outil inférieur (3) via des boulons.

11. Ligne de formage à chaud pour la fabrication de produits de tôle d'acier moulés à chaud et durcis à la presse tels que des composants de véhicules automobiles, présentant un dispositif de chauffage et un dispositif de formage, dans lequel le dispositif de chauffage présente un poste de maintien de température (1) avec un outil supérieur (2) et un outil inférieur (3) et le poste de maintien de température (1) présente au moins une source de maintien de température pour le chauffage et la source de maintien de température se présente sous la forme d'un inducteur (8), et les plaques de maintien de température (4, 5) peuvent être chauffées par l'inducteur (8), des plaques de maintien de température (4, 5) échangeables peuvent être agencées, pour le chauffage de divers composants, **caractérisée en ce que** sur le poste de maintien de température (1), sur l'outil supérieur (2) et/ou sur l'outil inférieur (3) lors de l'installation du poste de maintien de température (1), **caractérisée par** les étapes de procédé suivantes :
- chauffage d'un flan de tôle (7) à une température en dessous de AC3,
- transfert du flan de tôle (7) dans un poste de maintien de température (1),
- chauffage de zones d'un premier type dans le poste de maintien de température (1), dans lequel les zones du premier type viennent en contact direct avec la plaque de maintien de température (4, 5) et sont chauffées par chauffage conducteur à une température supérieure à AC3,
- maintien des zones du second type à une température en dessous de AC3,
- transfert du flan de tôle (7) dans un outil de moulage, moulage et durcissement à la presse.

12. Procédé selon la revendication 11, **caractérisé en ce que** le flan de tôle (7) est chauffé en dessous de AC1, dans lequel la zone du deuxième type est maintenue dans le poste de maintien de température (1) en dessous de AC1.
